# EUROPEAN PATENT APPLICATION

(11) **EP 4 607 035 A1**
(43) Date of publication of application: **27.08.2025**
(21) Application number: 25159854.6
(22) Date of filing: 25.02.2025
(51) Int. Cl.: F04D 27/00, G05D 23/19, G06F 1/20

(54) **TEMPERATURE MANAGING SYSTEM AND TEMPERATURE MANAGING METHOD**

(30) Priority: 26.02.2024 TW 113106797
(71) Applicant: Arcadyan Technology Corporation, Hsinchu City 30071 (TW)
(72) Inventor: LIN, Chien-Hung, 300 Hsinchu City (TW)
(74) Representative: Krauns, Christian

(57) **Abstract**

A temperature managing system, is for managing a temperature of an electronic device, and the electronic device includes a first key component having a first temperature. The temperature managing system includes the following components. A fan module, includes a rotating speed controller and a fan with a rotating speed. A temperature sensor, senses a temperature of the first key component in the electronic device and generates a temperature information accordingly. A processor, coupled to the fan module through the first interface and coupled to the temperature sensor through the second interface. The processor is configured to receive the temperature information through the second interface, correspondingly generate a rotating speed control signal according to the temperature information, and send the rotating speed control signal to the rotating speed controller through the first interface, so as to control the rotating speed of the fan.

## Description

### TECHNICAL FIELD

The present disclosure relates to a heat dissipation mechanism of an electronic device, and particularly relates to a temperature managing system and a method thereof for managing the temperature of the electronic device.

### BACKGROUND

When an electronic device performs data processing, each component of the electronic device will generate a large amount of heat energy, causing a rise of the temperature. Therefore, a heat dissipation mechanism is required in the electronic device to remove the heat energy. A fan is usually utilized for the heat dissipation mechanism, and the higher the rotating speed of the fan, the better the effect of heat dissipation can be achieved.

In a common heat dissipation mechanism, the fan maintains a fixed rotating speed. However, when the fan operates at a higher rotating speed, the power consumption of the fan will increase, resulting in a waste of electric energy.

To address the above issues, an improved heat dissipation mechanism is needed, which can automatically track the temperature of electronic devices, and dynamically adjust the rotating speed of the fan base on the current temperature, so as to reduce the power consumption of the fan itself.

### SUMMARY

According to one embodiment of the present disclosure, a temperature managing system is provided. The temperature managing system is for managing a temperature of an electronic device, and the electronic device includes a first key component having a first temperature. The temperature managing system includes the following components. A fan module includes a rotating speed controller and a fan with a rotating speed. A temperature sensor is for sensing a temperature of a first key component in the electronic device and generating a temperature information accordingly. A processor is coupled to the fan module through a first interface and coupled to the temperature sensor through a second interface. A processor is configured for receiving the temperature information through the second interface, generating a rotating speed control signal correspondingly based on the temperature information and sending the rotating speed control signal to the rotating speed controller through the first interface, so as to control the rotating speed of the fan.

According to another embodiment of the present disclosure, a temperature managing method is provided. The temperature managing method is for managing a temperature of an electronic device, and the electronic device includes a first key component having a first temperature. The temperature managing method includes the following steps: sensing a first temperature of a first key component in the electronic device by a temperature sensor and generating a temperature information accordingly, receiving the temperature information by a processor, generating a rotating speed control signal correspondingly based on the temperature information by the processor, and sending the rotating speed control signal to a rotating speed controller of a fan module by the processor, for controlling a rotating speed of a fan of the fan module, wherein the processor is coupled to the fan module through a first interface and coupled to the temperature sensor through a second interface.

### BRIEF DESCRIPTION OF THE DRAWINGS

FIG. 1A is a block diagram of a temperature managing system 1000a according to one embodiment of the present disclosure.
FIG. 1B is a flow chart of a temperature managing method according to one embodiment of the present disclosure.
FIG. 2A is a block diagram of a temperature managing system 1000b according to one embodiment of the present disclosure.
FIG. 2B is a flow chart of a temperature managing method according to one embodiment of the present disclosure.
FIG. 3A is a block diagram of a temperature managing system 1000c according to one embodiment of the present disclosure.
FIG. 3B is a flow chart of a temperature managing method according to one embodiment of the present disclosure.
FIG. 4 is a block diagram of a temperature managing system 1000d according to one embodiment of the present disclosure.
FIG. 5A is a flow chart of an adjusting method for the rotating speed of the fan.

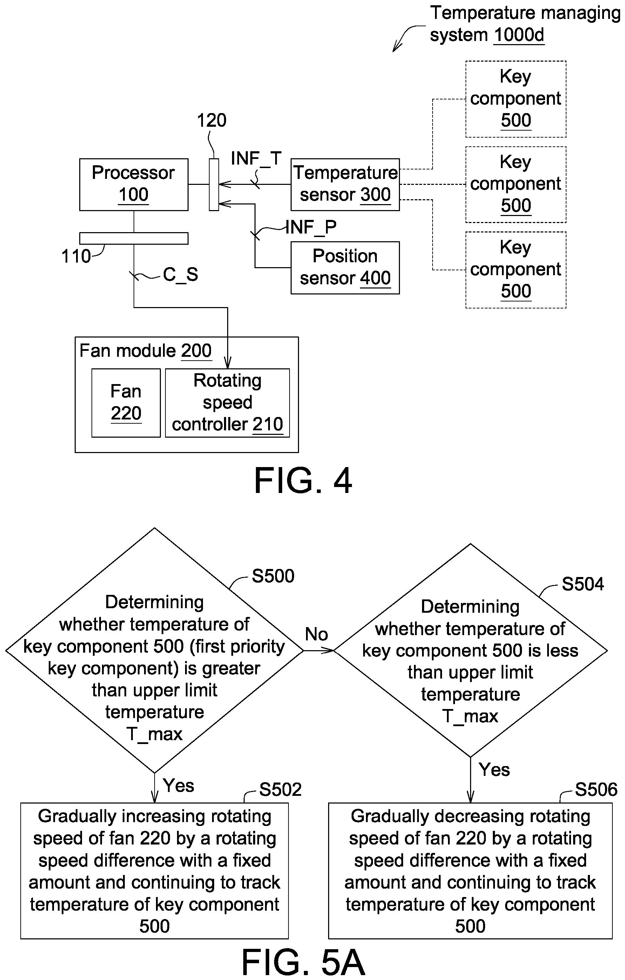

FIGS. 5B-1, 5B-2, 5C-1 and 5C-2 are schematic diagrams of a method for adjusting the rotating speed of the fan in FIG. 5A.

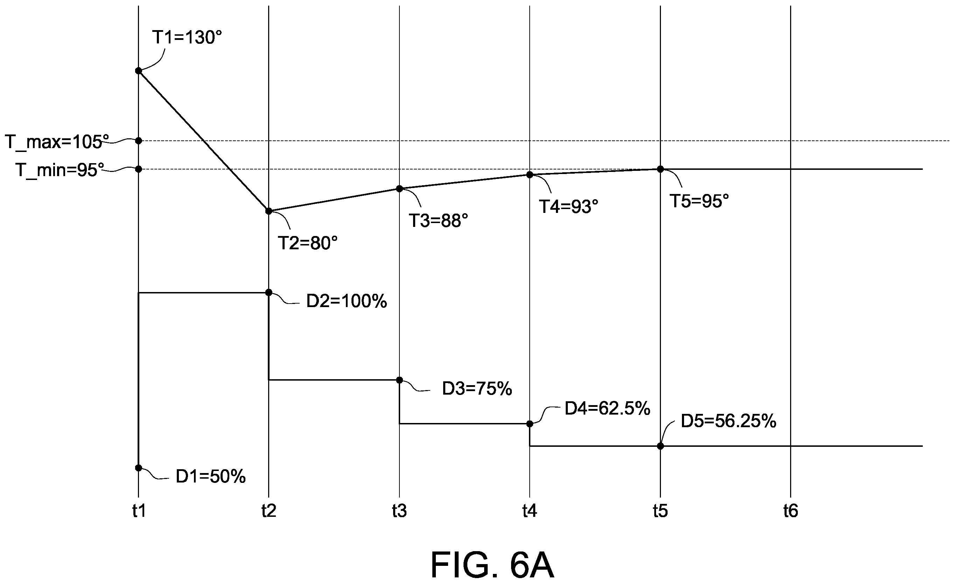

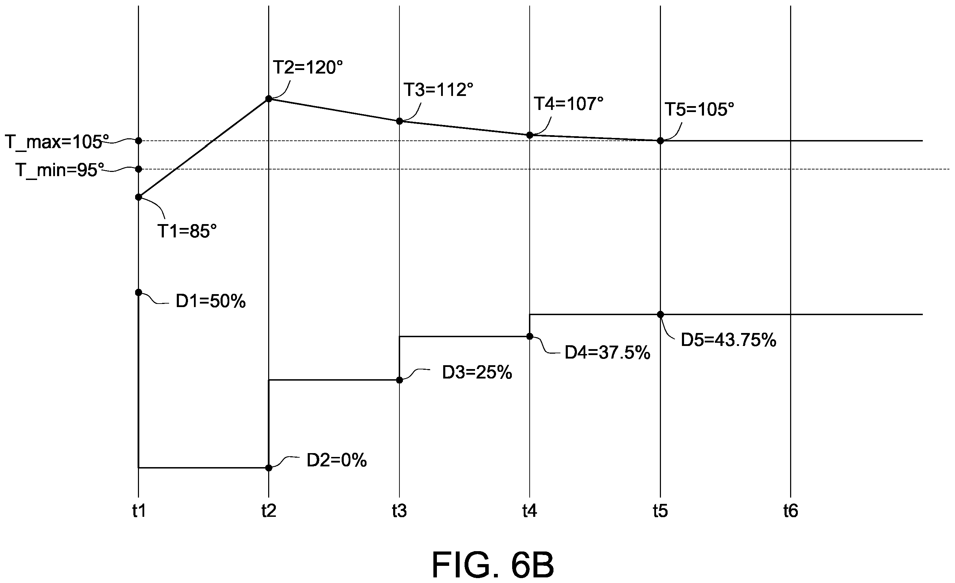

FIGS. 6A and 6B are schematic diagrams of another example of the rotating speed of the fan adjustment method.

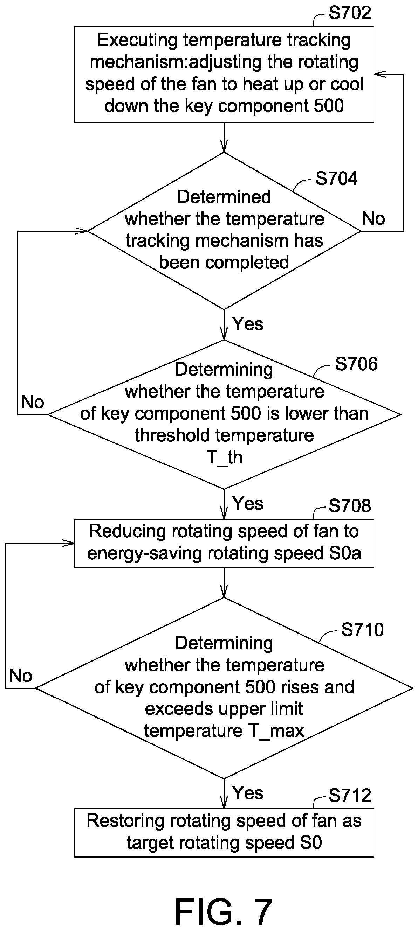

FIG. 7 is a flow chart of a temperature managing method based on one embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

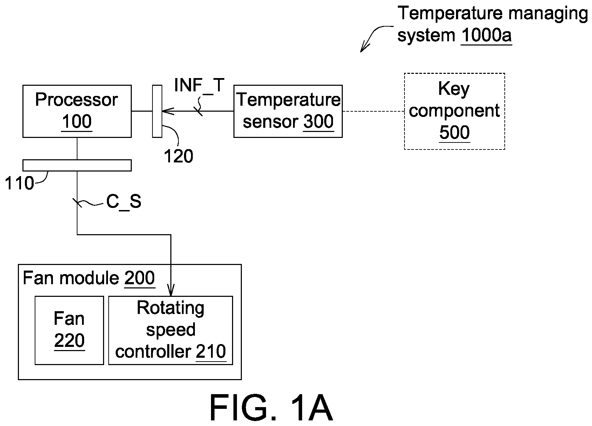

FIG. 1A is a block diagram of a temperature managing system 1000a according to one embodiment of the present disclosure. The temperature managing system 1000a can be disposed inside an electronic device (not shown), and the temperature managing system 1000a is used to manage the temperature of the electronic device. The electronic device can be, for example, a communication device, including a gateway, a router, etc. As shown in FIG. 1A, the temperature managing system 1000a comprises a processor 100, a fan module 200 and a temperature sensor 300. The fan module 200 and the temperature sensor 300 are coupled to the processor 100 through the interface 110 and the interface 120 respectively. The interface 110 can be, for example, a general-purpose-input-output (GPIO) interface, and the interface 120 can be, for example, an inter-integrated-circuit (I²C) interface. Data and control signals can be transmitted between the processor 100, the fan module 200 and the temperature sensor 300 through the interface 110 or the interface 120 respectively.

More specifically, the fan module 200 may comprise a rotating speed controller 210 and a fan 220. The rotating speed controller 210 is used for controlling the rotating speed of the fan 220. The air flow generated by the fan 220 can reduce the temperature of the electronic device, so as to achieve the purpose of heat dissipation.

The processor 100 is, for example, a central processing unit (CPU) or a micro control unit (MCU). The processor 100 sends the rotating speed control signal C_S to the rotating speed controller 210 in the fan module 200, so as to control the rotating speed of the fan 220 by the rotating speed controller 210.

The temperature sensor 300 is used for sensing the temperature of the electronic device. In this embodiment, the temperature sensor 300 specifically performs temperature sensing on the key components 500 in the electronic device. The key component 500 is, for example, a component with relatively large power consumption in an electronic device, such as a radio frequency chip of a wireless communication transceiver. The temperature of the higher temperature portion of the electronic device may be generally represented by the temperature of the key component 500. The temperature sensor 300 can be disposed near the key component 500 or on the key component 500, so as to facilitate sensing the temperature of the key component 500. Based on the sensed temperature of the key component 500, the temperature sensor 300 generates a temperature information INF_T correspondingly, and provides the temperature information INF_T to the processor 100 through the interface 120. The processor 100 generates the corresponding rotating speed control signal C_S based on the temperature information INF_T. In another embodiment, the temperature sensor 300 may be integrated with the key component 500, so as to implement the present invention in the form of a single-component integrated circuit or a system on a chip (SOC). Those skilled in the art can think of various modifications and combinations to correspondingly set and read the corresponding temperature information INF_T, and the various modifications and combinations fall within the spirit of the present disclosure and the scope of the appended claims.

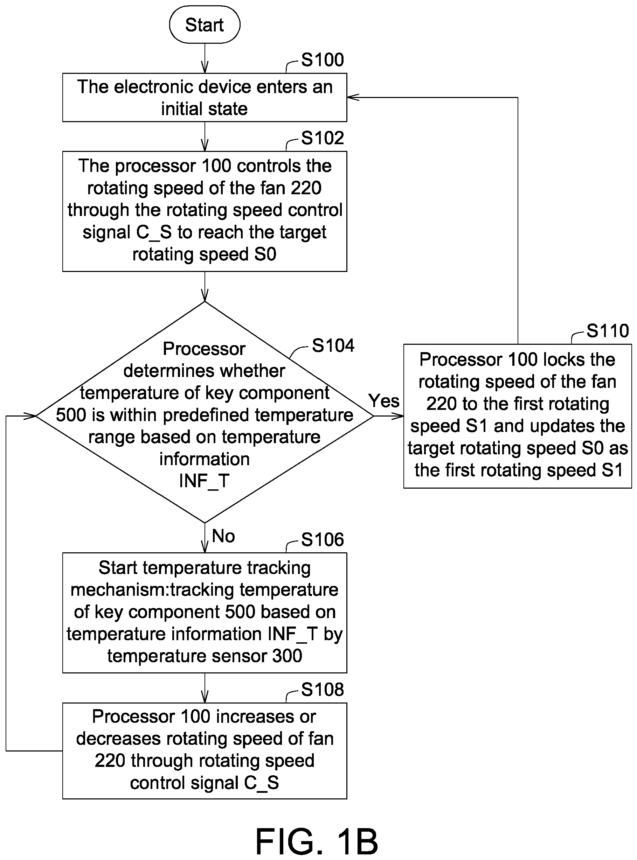

The rotating speed control signal C_S is, for example, a pulse width modulation (PWM) signal or a voltage signal. The processor 100 provides the rotating speed control signal C_S to the fan module 200 through the interface 110. The rotating speed controller 210 of the fan module 200 receives the rotating speed control signal C_S, and controls the rotating speed of the fan 220 in response to the rotating speed control signal C_S. In one embodiment, the rotating speed control signal C_S is a pulse width modulation signal, and the rotating speed control signal C_S has a duty cycle DR. The larger the duty cycle DR is, the larger the rotating speed of the fan 220 is. And, the smaller the duty cycle DR is, the smaller the rotating speed of the fan 220 is. In one embodiment, the rotating speed control signal C_S is a voltage signal, and the rotating speed control signal C_S corresponds to an input voltage. The larger the input voltage of the rotating speed control signal C_S is, the larger the rotating speed of the fan 220 is. And, the smaller the input voltage of the rotating speed control signal C_S is, the smaller the rotating speed of the fan 220 is. Those skilled in the art are able to think of various modifications and combinations to set the rotating speed control signal C_S accordingly. For example, when the processor 100 uses a general purpose processor, as mentioned above, the interface 110 can be disposed as a general-purpose-input-output (GPIO) interface, and the outputted rotating speed control signal C_S is a pulse width modulation signal. When the processor 100 uses an analog integrated circuit or a power managing integrated circuit with a function of analog output voltage signal, the outputted rotating speed control signal C_S is a voltage signal. Various modifications and combinations thereof fall within the spirit of the present disclosure and the scope of the appended claims. The more detailed operation of the temperature managing system 1000a will be described in the following paragraphs with reference to FIG. 1B.

FIG. 1B is a flow chart of a temperature managing method according to one embodiment of the present disclosure. The temperature managing method of the present embodiment is implemented in conjunction with the temperature managing system 1000a in FIG. 1A. Please refer to FIGS. 1A and 1B, firstly, in step S100, the electronic device enters an initial state after being powered on. Then, in step S102, the processor 100 controls the rotating speed of the fan 220 through the rotating speed control signal C_S, so that the rotating speed of the fan 220 reaches the target rotating speed S0. The target rotating speed S0 is an ideal target value obtained based on historically statistical data of the temperature managing system 1000a. When the fan 220 operates at the target rotating speed S0, the temperature of the key component 500 may be within a predefined temperature range.

Then, in step S104, the processor 100 determines whether the temperature of the key component 500 is actually within the predefined temperature range, based on the temperature information INF_T. The predefined temperature range is a range between the upper limit temperature T_max and the lower limit temperature T_min. The upper limit temperature T_max is, e.g., 105 degrees Celsius (hereinafter expressed in °C), and the lower limit temperature T_min is, e.g., 95 °C.

If the determining result of step S104 is "No", which means that the temperature of the key component 500 is outside the predefined temperature range, then step S106 is executed to start the temperature tracking mechanism, wherein step S106 comprises the following steps: tracking the temperature of the key component 500 based on the temperature information INF_T provided by the temperature sensor 300, and adjusting the rotating speed of the fan 220 accordingly, so as to heat up or cool down the key component 500. In the subsequent step S108, the processor 100 increases or decreases the rotating speed of the fan 220 through the rotating speed control signal C_S, so that the temperature of the key component 500 increases or decreases and returns to the predefined temperature range. For example, when the temperature information INF_T indicates that the temperature of the key component 500 is higher than the upper limit temperature T_max, which means that the key component 500 is overheated, then the rotating speed of the fan 220 is increased to cool down the key component 500. When the rotating speed of the fan 220 is increased to a specific rotating speed (for example, the first rotating speed S1), the temperature of the key component 500 can be cooled down to within the predefined temperature range. Alternatively, when the temperature information INF_T indicates that the temperature of the key component 500 is lower than the lower limit temperature T_min, it means that the fan 220 does not need to operate at such a high rotational speed to cause waste of power, and the rotational speed of the fan 220 can be reduced. When the rotating speed of the fan 220 is reduced to the first rotating speed S1, the key component 500 can be heated and the temperature thereof can be increased to within a predefined temperature range. Then, step S104 is executed again, and the processor 100 determines whether the temperature of the key component 500 returns to a predefined temperature range due to the increase or decrease in the rotating speed of the fan 220. If the determining result in step S104 is "Yes", which means that the adjusted first rotating speed S1 of the fan 220 in step S108 is an ideal target value under the current operating state of the electronic device, then step S110 is executed, wherein steps S110 comprises the steps of the processor 100 locking the rotating speed of the fan 220 to the first rotating speed S1 through the rotating speed control signal C_S (i.e., the rotating speed of the fan 220 is maintained at the first rotating speed S1) and updating the target rotating speed S0 to the first rotating speed S1. Then, the temperature managing system 1000a returns to the initial state of step S100 (the target rotating speed S0 in the initial state has been updated as the first rotating speed S1).

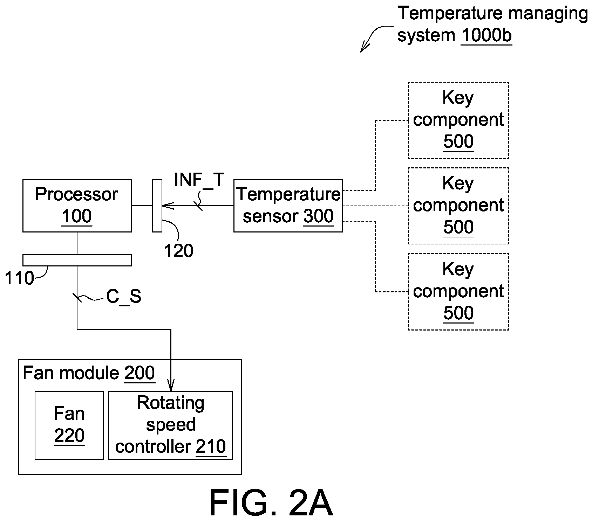

FIG. 2A is a block diagram of a temperature managing system 1000b according to one embodiment of the present disclosure. The temperature managing system 1000b in FIG. 2A is similar to the temperature managing system 1000a in FIG. 1A, and the difference lies in that: the temperature sensing device 300 performs temperature sensing on multiple key components. In the embodiment of FIG. 2A, the electronic device comprises three key components 500-520. The key components 500-520 are components that consume large amounts of power. For example, key component 500 is a radio frequency chip of a wireless communication transceiver, key component 510 is a central processing unit, and key component 520 is an Ethernet PHY IC. The processor 100 selects one of the key components 500-520 as the first priority key component, and controls the rotating speed of the fan based on the temperature of the first priority key component.

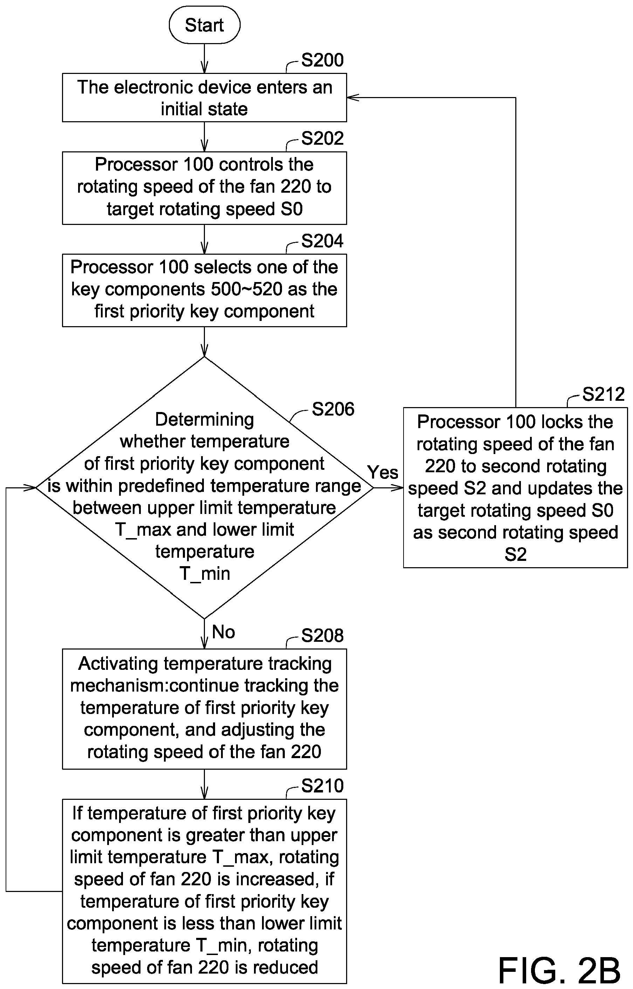

FIG. 2B is a flow chart of a temperature managing method according to one embodiment of the present disclosure. The temperature managing method in FIG. 2B is implemented in conjunction with the temperature managing system 1000b in FIG. 2A. The steps in FIG. 2B are similar to the steps in FIG. 1B, and the difference lies in that: after step S200 in which the electronic device is powered on and enters the initial state, and after step S202 in which the processor 100 initially sets the rotating speed of the fan 220 as the target rotating speed S0, the flow in FIG. 2B further comprises step S204: the processor 100 selects one of the key components 500-520 as the first priority key component.

In one example, the processor 100 selects a key component, which is among the key components 500-520, that exceeds the upper limit temperature T_max the most, as the first priority key component. More specifically, the first priority key component is a selected one among the key components 500-520, while the key components 500-520 may include another key component which is referred to as a "second key component" (i.e., such a second key component can be any key component, among the key components 500-520, other than the first priority key component). The first priority key component has a first temperature, while the second key component has a second temperature. The aforementioned "the first priority key component exceeds the upper limit temperature T_max the most" means that the first temperature of the first priority key component exceeds the upper limit temperature T_max more than the second temperature of the second key component. In other words, the key components 500-520 may be respectively configured with different upper limit temperatures T_max and lower limit temperatures T_min, so as to respectively correspond to actual need of each of the key components 500-520. The processor 100 selects the key component that exceeds the respective upper limit temperature T_max the most, as the first priority key component. For example, the temperature of key component 500 is 130 °C, the temperature of key component 510 is 120 °C, and the temperature of key component 520 is 110 °C. The key component 500 exceeds the upper limit temperature T_max (i.e., 105 °C) the most, hence, the key component 500 is selected as the first priority key component. In another example, the temperature of the key component 500 is 130 °C, and the corresponding upper limit temperature T_max is 105 °C. The temperature of the key component 510 is 120 °C, and the corresponding upper limit temperature T_max is 120 °C. The temperature of the key component 520 is 110 °C, and the corresponding upper limit temperature T_max is 110 °C. The key component 500 exceeds its corresponding upper limit temperature T_max (i.e., 105 °C) the most, so the key component 500 is selected as the first priority key component. Those with ordinary skill in the art can think of various modifications and combinations to correspondingly configure and select key component as the first priority key component, various modifications and combinations fall within the spirit of the present disclosure and the scope of the appended claims.

In another example, if none of the key components 500-520 exceeds the upper limit temperature T_max, then one of the key components 500-520 that is closest to the upper limit temperature T_max is selected as the first priority key component. For example, the temperature of key component 500 is 103 °C, the temperature of key component 510 is 100 °C, and the temperature of key component 520 is 98 °C. The key component 500 is closest to the upper limit temperature T_max, so the key component 500 is selected as the first priority key component.

After step S204, step S206 is executed, wherein step S206 comprises determining whether the temperature of the first priority key component is within a predefined temperature range between the upper limit temperature T_max and the lower limit temperature T_min. If the determining result of step S206 is "No", step S208 is executed to activate the temperature tracking mechanism which is continuously tracking the temperature of the first priority key component, and adjusting the rotating speed of the fan 220 accordingly, so as to increase or decrease the temperature of the first priority key component. In step S210, if the temperature of the first priority key component is greater than the upper limit temperature T_max, the rotating speed of the fan 220 is increased. If the temperature of the first priority key component is less than the lower limit temperature T_min, the rotating speed of the fan 220 is reduced.

Then, step S206 is executed again, wherein step S206 comprises determining whether the temperature of the first priority key component returns to the predefined temperature range due to the increase or decrease in the rotating speed of the fan 220. If the determining result in step S206 is "Yes", which means that the rotating speed of the fan 220 is within the predefined temperature range, and the rotating speed of the fan 220 is adjusted as a specific rotating speed (for example, the second rotating speed S2), then step S212 is executed, wherein step S212 comprises the processor 100 locking the rotating speed of the fan 220 to the second rotating speed S2, and the target rotating speed S0 being updated as the second rotating speed S2. Then, the temperature managing system 1000b returns to the initial state of step S200 (the target rotating speed S0 in the initial state has been updated as the second rotating speed S2).

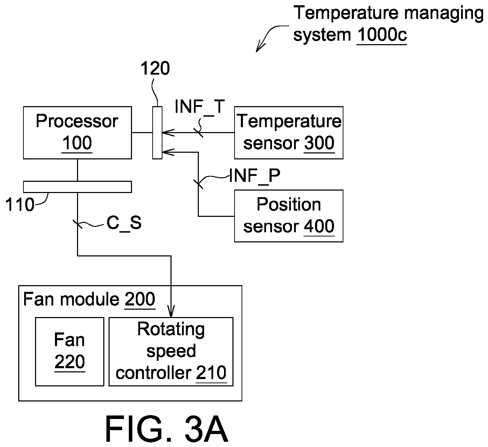

FIG. 3A is a block diagram of a temperature managing system 1000c according to one embodiment of the present disclosure. The temperature managing system 1000c of FIG. 3A is similar to the temperature managing system 1000a of FIG. 1A, and the difference lies in that: the temperature managing system 1000c of FIG. 3A further comprises a position sensor 400, which is coupled to the processor 100 through the interface 120. The position sensor 400 is used for sensing the disposing manner of the electronic device, and correspondingly generating the position information INF_P of the electronic device. The location information INF_P is transmitted to the processor 100 via the interface 120.

The electronic device has different disposing manner or disposing positions relative to the desktop or platform, such as upright, horizontal, and tilted at other angles. Electronic devices have different heat dissipation requirements due to their different disposing manner. Accordingly, the fan 220 has different target rotating speeds S0. For example, when the electronic device is disposed in an upright position, the heat can be dissipated through the dissipation holes of the chassis, so the heat dissipation efficiency is better. And thus, the fan 220 can achieve the expected heat dissipation effect at a lower rotating speed, so the target rotating speed S0 of the fan 220 can be lower. On the other hand, when the electronic device is placed horizontally, some of the heat dissipation holes of the chassis may be blocked, thereby reducing the heat dissipation effect. And thus, in this case, the target rotating speed S0 of the fan 220 can be higher. The processor 100 can set a value of the target rotating speed S0 of the fan 220 based on the current position information INF_P of the electronic device. Namely, the target rotating speed S0 is associated with the position information INF_P.

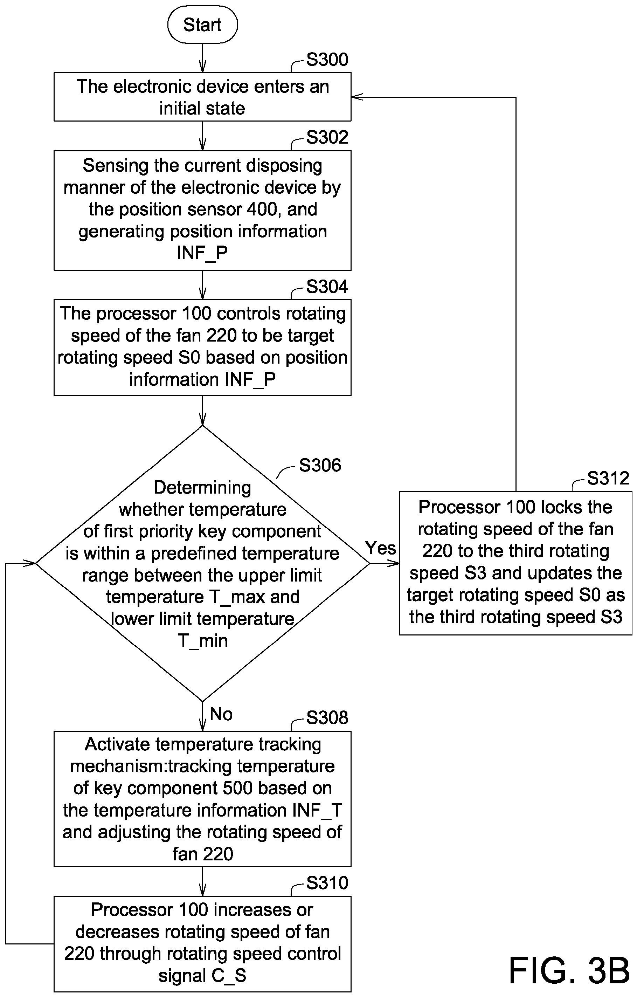

FIG. 3B is a flow chart of a temperature managing method according to one embodiment of the present disclosure. The temperature managing method in FIG. 3B is implemented in conjunction with the temperature managing system 1000c in FIG. 3A. The steps in FIG. 3B are similar to the steps in FIG. 1B, and the difference lies in that: after step S300 in which the electronic device is powered on and enters the initial state, the flow in FIG. 3B further comprises a step S302: sensing the current disposing manner of the electronic device by the position sensor 400. Furthermore, the position sensor 400 generates position information INF_P accordingly.

Then, in step S304, the processor 100 sets the rotating speed of the fan 220 as the target rotating speed S0 based on the position information INF_P. The target rotating speed S0 is associated with the position information INF_P, that is, the target rotating speed S0 is an ideal target value suitable for the current disposing manner of the electronic device. Then, in step S306, the processor 100 determines whether the temperature of the key component 500 is within the range between the upper limit temperature T_max and the lower limit temperature T_min based on the temperature information INF_T. If the determining result in step S306 is "No", which means that the temperature of the key component 500 is outside the predefined temperature range, then step S308 is executed to activate the temperature tracking mechanism, which comprises tracking the temperature of the key component 500 based on the temperature information INF_T, and adjusting the rotating speed of the fan 220 accordingly.

In the subsequent step S310, the processor 100 increases or decreases the rotating speed of the fan 220 through the rotating speed control signal C_S, so as to decrease or increase the temperature of the key component 500. Then, step S306 is reexecuted to determine whether the key component 500 returns to the range between the upper limit temperature T_max and the lower limit temperature T_min. If the determining result in step S306 is "No", step S308 is executed again.

If the determining result of step S306 is "Yes", which means that the key component 500 returns to the predefined temperature range, and, at this moment, the rotating speed of the fan 220 is the third rotating speed S3 (that is, the third rotating speed S3 causes the key component 500 to return to the predefined temperature range), then step S312 is executed, wherein step S312 comprising the processor 100 locking the rotating speed of the fan 220 to the third rotating speed S3 of step S306, and updating the target rotating speed S0 as the third rotating speed S3. Then, the temperature managing system 1000c returns to the initial state of step S300 (the target rotating speed S0 in the initial state has been updated as the third rotating speed S3).

FIG. 4 is a block diagram of a temperature managing system 1000d according to one embodiment of the present disclosure. The temperature managing system 1000d of FIG. 4 is a combination of the temperature managing system 1000b of FIG. 2A and the temperature managing system 1000c of FIG. 3A. In the embodiment of FIG. 4, the processor 100 sets the target rotating speed S0 of the fan 220 based on the current disposing manner of the electronic device. Namely, the target rotating speed S0 in the embodiment of FIG. 4 is related to the position information INF_P.

Moreover, the processor 100 selects one of the key components 500-520 as the first priority key component. When the temperature of the first priority key component is outside the predefined temperature range, the temperature tracking mechanism is activated: the rotating speed of the fan 220 is increased or decreased, so as to cause the first priority key component to cool down or heat up and hence return to the predefined temperature range. Namely, the temperature tracking mechanism of the embodiment in FIG. 4 is based on the temperature change of the first priority key component.

FIG. 5A is a flow chart of an adjusting method for the rotating speed of the fan, which comprises detailed steps of rotating speed of the fan adjustment in the temperature managing method of the aforementioned embodiments, and can be implemented in conjunction with the temperature managing systems 1000a-1000d. The rotating speed of the fan adjustment method in FIG. 5A is to gradually increase or decrease the rotating speed of the fan 220 by rotating speed difference with a fixed amount. In step S500, it is determined whether the temperature of the key component 500 (for example, the first priority key component) is greater than the upper limit temperature T_max. If the determining result of step S500 is "Yes", which means that the rotating speed of the fan 220 must be increased, so as to decrease the temperature of the key component 500, then step S502 is executed, wherein step S502 comprising gradually increasing the rotating speed of the fan 220 by a rotating speed difference with a fixed amount, and continuing to track the temperature of the key component 500, until the key component 500 cools down to a predefined temperature range. In one example, the rotating speed control signal C_S is a pulse width modulation signal, and the rotating speed of the fan 220 is proportional to the duty cycle DR of the rotating speed control signal C_S. Therefore, the duty cycle DR of the rotating speed control signal C_S is gradually increased by a duty cycle difference ΔDR with a fixed amount, so that the rotating speed of the fan 220 is gradually increased by a rotating speed difference with a fixed amount. In another example, the rotating speed control signal C_S is a voltage signal, and the rotating speed of the fan 220 is proportional to the input voltage V of the rotating speed control signal C_S. Therefore, the input voltage V of the speed control signal C_S is gradually increased by a voltage difference ΔV with a fixed amount, so that the rotating speed of the fan 220 is gradually increased by a rotating speed difference with a fixed amount.

On the other hand, if the determining result of step S500 is "No", step S504 is executed: determine whether the temperature of the key component 500 is less than the lower limit temperature T_min. If the determining result in step S504 is "yes", indicating that the key component 500 has achieved a low temperature (which is low enough), and the rotating speed of the fan 220 may be reduced to save power. Therefore, step S506 is executed: gradually reducing the rotating speed of the fan 220 by a rotating speed difference with a fixed amount, and continue to track the temperature of the key component 500 until the temperature of the key component 500 rises to the predefined temperature range. For example, the duty cycle DR of the rotating speed control signal C_S is gradually reduced by a duty cycle difference ΔDR with a fixed amount, or the input voltage V of the rotating speed control signal C_S is gradually reduced by a voltage difference ΔV with a fixed amount, so that the rotating speed of the fan 220 is gradually reduced by a rotational speed difference with a fixed amount.

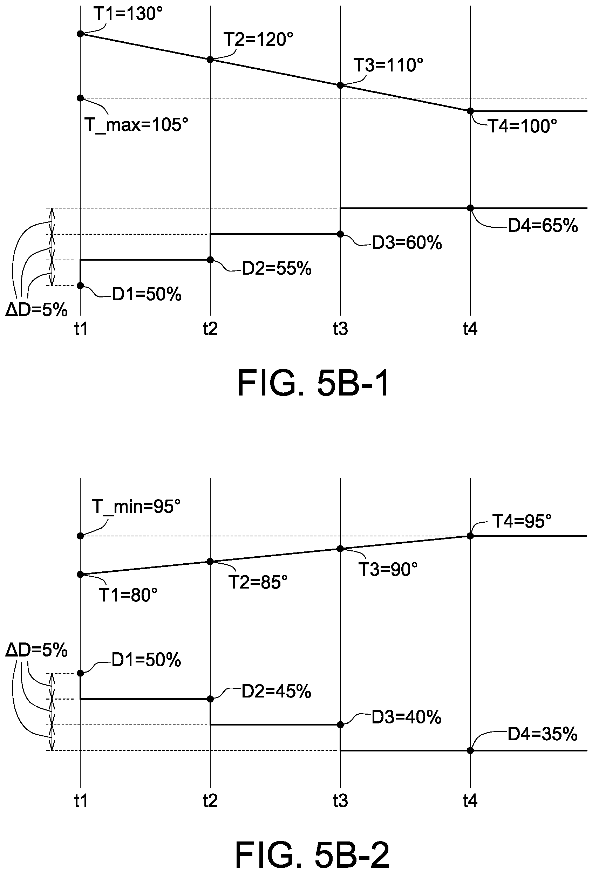

FIGS. 5B-1, 5B-2, 5C-1 and 5C-2 are schematic diagrams of a method for adjusting the rotating speed of the fan in FIG. 5A. Specifically, FIGS. 5B-1 and 5B-2 take the rotating speed control signal C_S as a pulse width modulation signal as an example, and FIGS. 5C-1 and 5C-2 take the rotating speed control signal C_S as a voltage signal as an example. Firstly, please refer to FIG. 5B-1, at time point t1, the duty cycle DR1 of the rotating speed control signal C_S is, e.g., 50%, and the temperature T1 of the key component 500 is 130 °C, which is greater than the upper limit temperature T_max (the upper limit temperature T_max is 105 °C). Therefore, the rotating speed of the fan 220 must be increased so as to cool down the key component 500. The duty cycle DR1 of the rotating speed control signal C_S is increased to the duty cycle DR2 by a duty cycle difference ΔDR with a fixed amount. The duty cycle difference ΔDR is, e.g., a fixed amount of 5%, and the duty cycle DR2 is equal to DR1+ΔDR, which is equal to 55%.

Since the rotating speed control signal C_S increases to the duty period DR2, the rotating speed of the fan 220 increases. Therefore, the temperature of the key component 500 continues to decrease from time point t1 to time point t2. At time point t2, temperature of the key component 500 drops to the temperature T2 of 120 °C. However, the temperature T1 is still greater than the upper limit temperature T_max, hence, the rotating speed of the fan 220 must be increased. The duty cycle DR2 of the rotating speed control signal C_S is increased to the duty cycle DR3 by a duty cycle difference ΔDR with a fixed amount, which is equal to DR2+ΔDR (and equal to 60%).

From time point t2 to time point t3, the rotating speed of the fan is increased based on the increased duty cycle DR3 according to the rotating speed control signal C_S, such that the temperature of the key component 500 continues to decrease. At time point t3, temperature of the key component 500 drops to the temperature T3 of 110 °C. However, the temperature T3 is still greater than the upper limit temperature T_max, so the rotating speed of the fan must be increased. The duty cycle DR3 is increased to the duty cycle DR4 by a duty cycle difference ΔDR with a fixed amount, which is equal to DR3+ΔDR (and equal to 65%).

From time point t3 to time point t4, the rotating speed of the fan is increased based on the duty cycle DR4, so that the temperature of the key component 500 continues to drop to the temperature T4 of 100 °C. The temperature T4 is less than the upper limit temperature T_max and returns to the predefined temperature range, so the rotating speed control signal C_S is locked to the duty cycle DR4 = 65%, so as to lock the rotating speed of the fan, and the temperature T4 of the key component 500 is maintained at approximately 100 °C.

On the other hand, referring to FIG. 5B-2, at time point t1, if the temperature T1 of the key component 500 is 80 °C which is less than the lower limit temperature T_min (the lower limit temperature T_min is 95 °C), the rotating speed of the fan 220 can be decreased to save electric energy. The duty cycle DR1 of the rotating speed control signal C_S is gradually reduced by a duty cycle difference ΔDR with a fixed amount. For example, during a period from time point t1 to time point t2, duty cycle DR1 is reduced to duty cycle DR2, (equal to DR1-ΔDR, which is equal to 45%), and temperature of the key component 500 rises to the temperature T2 of 85 °C.

Then, during a period from the time point t2 to the time point t4, the rotating speed control signal C_S gradually reduces to the duty period DR3 (equal to DR2-ΔDR and equal to 40%) and the duty period DR4 (equal to DR3-ΔDR and equal to 35%), and temperature of the key component 500 gradually rises to temperature T3 (i.e., 85 °C) and temperature T4 (i.e., 95 °C).

The temperature T4 reaches the lower limit temperature T_min. Therefore, after the time point t4, the rotating speed control signal C_S is locked to the duty cycle DR4=35%, so that the temperature of the key component 500 is maintained at approximately 95 °C.

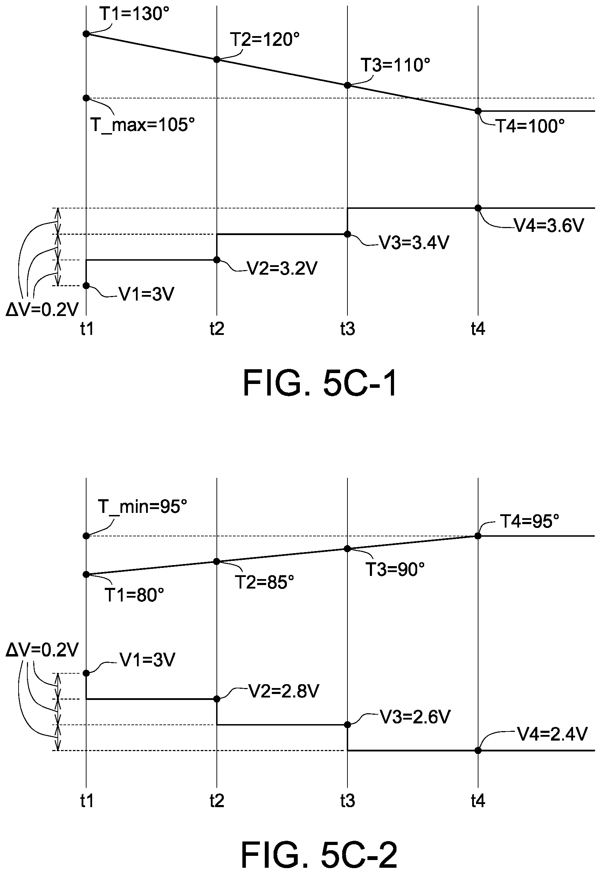

Next, referring to FIG. 5C-1 (the rotating speed control signal C_S is a voltage signal), at time point t1, the temperature T1 of the key component 500 is 130 °C and is greater than the upper limit temperature T_max. The rotating speed of the fan must be increased, so as to cool down the key component 500. The input voltage V1 of the rotating speed control signal C_S is gradually increased by a voltage difference value ΔV with a fixed amount 0.2V. During the period, from time point t1 to time point t2, the input voltage is increased to V2, (equal to V1+ΔV, which is equal to 3.2V), and the temperature of the key component 500 falls to the temperature T2 (120 °C).

Then, from time point t2 to time point t4, the rotating speed control signal C_S gradually increases to the input voltage V3 (equal to V2+ΔV, and equal to 3.4V) and the input voltage V4 (equal to V3+ΔV, and equal to 3.6V). Temperature of the key components 500 is gradually reduced to temperature T3 (i.e., 110 °C) and temperature T4 (i.e., 100 °C). The temperature T4 is lower than the upper limit temperature T_max. Therefore, after the time point t4, the rotating speed control signal C_S is locked to the input voltage V4=3.6V, so that the temperature of the key component 500 is maintained at approximately 100 °C.

Next, referring to FIG. 5C-2, at time point t1, the temperature T1 of the key component 500 is 80 °C, which is less than the lower limit temperature T_min, and the rotating speed of the fan can be reduced to save electric energy. The input voltage V1 of the rotating speed control signal C_S is gradually reduced by a voltage difference value ΔV of a fixed amount of 0.2V. During the period from time point t1 to time point t2, the input voltage decreases to the input voltage V2, (equal to V1-ΔV, which is equal to 2.8V), and temperature of the key component 500 increases to the temperature T2 (i.e., 85 °C).

Then, during a period from time point t2 to time point t4, the rotating speed control signal C_S gradually reduces to the input voltage V3 (equal to V2-ΔV, and equal to 2.6V) and the input voltage V4 (equal to V3-ΔV, and equal to 2.4V), and the temperature of the key component 500 is gradually increased to temperature T3 (i.e., 90 °C) and temperature T4 (i.e., 95 °C). The temperature T4 reaches the lower limit temperature T_min. Therefore, after the time point t4, the rotating speed control signal C_S is locked to the input voltage V4=2.4V, so that the temperature of the key component 500 is maintained at approximately 95 °C.

FIGS. 6A and 6B are schematic diagrams of another example of the rotating speed of the fan adjustment method. Compared with the rotating speed of the fan adjustment method in FIGS. 5A to 5C-2, in which the rotating speed of the fan 220 is gradually increased or decreased with a fixed rotating speed difference, in the embodiments shown in FIGS. 6A and 6B, the rotating speed of the fan 220 is adjusted with a non-fixed rotating speed difference (taking the rotating speed control signal C_S as a pulse width modulation signal as an example).

Firstly, please refer to FIG. 6A, at time point t1, the duty cycle DR1 of the rotating speed control signal C_S is 50%, and the temperature T1 of the key component 500 is 130 °C, which is greater than the upper limit temperature T_max. Therefore, the rotating speed of the fan must be increased to cool down the key component 500. In this embodiment, the duty cycle DR1 of the rotating speed control signal C_S may be directly increased from 50% to the maximum duty cycle DR2 (equal to 100%).

Then, based on the increased duty cycle DR2, the key component 500 is cooled down to the temperature T2 (i.e., 80 °C) during the period from the time point t1 to the time point t2. Since the temperature T2 is already lower than the lower limit temperature T_min, the rotating speed of the fan can be reduced to save electric energy. At time point t2, the rotating speed control signal C_S is adjusted as the duty cycle DR3. The duty cycle DR3 (equal to 75%) is an average value of the duty cycle DR2 during the period from time point t1 to time point t2 and the duty cycle DR1 in the initial state. Namely, the duty cycle DR3 during the current period is set based on the average value of the duty cycle DR1 in the initial state and the duty cycle DR2 during the previous period, which is from time point t1 to time point t2. In other words, the current value of the duty cycle (i.e., DR3=75%) is set based on the average value of the initial value of the duty cycle (i.e., DR1=50%) and the previous value of the duty cycle (i.e., DR2=100%).

Similarly, during the subsequent period from time point t2 to time point t3, the key component 500 heats up to temperature T3 (i.e., 88 °C) based on the adjusted duty cycle DR3, which is still less than the lower limit temperature T_min. The rotating speed control signal C_S is adjusted as the duty cycle DR4 (equal to 62.5%), which is equal to the average value of the duty cycle DR3 and the duty cycle DR1 of the initial state, thereby reducing the rotating speed of the fan. Namely, the current value of the duty cycle (i.e., DR4=62.5%) is set based on the average value of the initial value of the duty cycle (i.e., DR1=50%) and the previous value of the duty cycle (i.e., DR3=75%).

Next, during the next period from time point t3 to time point t4, the temperature of the key component 500 rises to temperature T4 (i.e., 93 °C), which is still less than the lower limit temperature T_min. The rotating speed control signal C_S is adjusted as the duty cycle DR5 (equal to 56.25%), which is equal to the average value of the duty cycle DR4 and the duty cycle DR1 of the initial state. Namely, the current value of the duty cycle (i.e., DR5=56.25%) is set based on the average value of the initial value of the duty cycle (i.e., DR1=50%) and the previous value of the duty cycle (i.e., DR4=62.5%).

Then, at time point t5, the temperature of the key component 500 rises to the temperature T5 (i.e., 95 °C) and reaches the lower limit temperature T_min. After time point t5, the rotating speed control signal C_S is locked to the duty cycle DR5.

On the other hand, referring to FIG. 6B, the temperature T1 of the key component 500 at time point t1 is 85 °C, which is less than the lower limit temperature T_min. Therefore, the rotating speed of the fan can be reduced to save electric energy. The duty cycle DR1 of the rotating speed control signal C_S can be directly reduced to the minimum duty cycle DR2 (equal to 0%).

Then, during the period from time point t1 to time point t2, the temperature of the key component 500 rises to the temperature T2 (i.e., 120 °C) and is greater than the upper limit temperature T_max, and the rotating speed control signal C_S must be increased to the duty cycle DR3 to increase the rotating speed of the fan for cooling the key component 500. For example, the current value of the duty cycle (i.e., DR3=25%) is set based on the average value of the initial value of the duty cycle (i.e., DR1=50%) and the previous value of the duty cycle (i.e., DR2=0%).

Then, during the period from time point t2 to time point t3, the temperature of the key component 500 falls to the temperature T3 (i.e., 112 °C) and is still greater than the upper limit temperature T_max. Therefore, the rotating speed control signal C_S is necessary to be increased to the duty cycle DR4 for increasing the rotating speed of the fan. For example, the current value of the duty cycle (i.e., DR4=37.5%) is set based on the average value of the initial value of the duty cycle (i.e., DR1=50%) and the previous value of the duty cycle (i.e., DR3=25%).

Then, during the period from time point t3 to time point t4, the temperature of the key component 500 falls to the temperature T4 (i.e., 107 °C), which is still greater than the upper limit temperature T_max. Therefore, the rotating speed control signal C_S must be increased to the duty cycle DR5, so as to increase the rotating speed of the fan. For example, the current value of the duty cycle (i.e., DR5=43.75%) is set based on the average value of the initial value of the duty cycle (i.e., DR1=50%) and the previous value of the duty cycle (i.e., DR4=37.5%).

At time point t5, the key component 500 cools down to the temperature T5 (i.e., 105 °C) and is equal to the upper limit temperature T_max, so the rotating speed control signal C_S is locked to the duty cycle DR5.

FIG. 7 is a flow chart of a temperature managing method based on a one embodiment of the present disclosure. The temperature managing method of this embodiment further sets an energy-saving rotating speed S0a. When the fan 220 operates at the energy-saving rotating speed S0a, more electric energy can be saved. The energy-saving rotating speed S0a is a rotating speed with a smaller value, e.g., "0 rpm".

In step S702, a temperature tracking mechanism is executed: adjusting the rotating speed of the fan for heating up or cooling down the key component 500, and tracking the temperature of the key component 500 to confirm whether it returns to the predefined temperature range. Step S702 corresponds to step S106 in FIG. 1B, step S208 in FIG. 2B and step S308 in FIG. 3B.

Then, in step S704, it is determined whether the temperature tracking mechanism has been completed. Completion of the execution of the temperature tracking mechanism means that, the temperature of the key component 500 has returned to the predefined temperature range, and the rotating speed of the fan has been locked at a specific rotating speed (such as the first rotating speed S1, the second rotating speed S2, or the third rotating speed S3). If the determining result of step S704 is "No", step S702 is executed again. If the determining result of step S704 is "Yes", step S706 is executed: determining whether the temperature of the key component 500 is lower than the threshold temperature T_th. The threshold temperature T_th is, e.g., the average value of the upper limit temperature T_max and the lower limit temperature T_min.

If the determining result of step S706 is "No", executing step S704 again. If the determining result of step S706 is "Yes", step S708 is executed: reducing the rotating speed of the fan to the energy-saving rotating speed S0a. Then, step S710 is executed, to determine whether the temperature of the key component 500 rises and exceeds the upper limit temperature T_max. If the determining result of step S710 is "No", step S708 is executed again.

On the other hand, if the determining result of step S710 is "Yes", which means that the key component 500 exceeds the upper limit temperature T_max, the rotating speed of the fan is increased. Therefore, step S712 is then executed: restoring the rotating speed of the fan as the target rotating speed S0. Then, step S706 is executed to determine again whether the temperature of the key component 500 is lower than the threshold temperature T_th.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A temperature managing system (1000a), for managing a temperature of an electronic device, wherein the electronic device comprises a first key component (500) having a first temperature, the temperature managing system (1000a) comprises:
a fan module (200), comprising a rotating speed controller (210) and a fan (220) with a rotating speed;
a temperature sensor (300), for sensing a temperature of the first key component (500) in the electronic device, and generating a temperature information (INF_T) accordingly; and
a processor (100), coupled to the fan module (200) through a first interface (110), and coupled to the temperature sensor (300) through a second interface (120), wherein the processor (100) is configured for:
receiving the temperature information (INF_T) through the second interface (120);
generating a rotating speed control signal (C_S) correspondingly based on the temperature information (INF_T); and
sending the rotating speed control signal (C_S) to the rotating speed controller (210) through the first interface (110), so as to control the rotating speed of the fan (220).

2. The temperature managing system of claim 1, wherein the processor (100) initially sets the rotating speed of the fan (220) as a target rotating speed, and then the processor (100) adjusts the rotating speed of the fan (220) through the rotating speed control signal (C_S) when the temperature information (INF_T) indicates that the first temperature of the first key component (500) is outside a predefined temperature range,
wherein, the predefined temperature range is between an upper limit temperature and a lower limit temperature,
wherein the upper limit temperature is between 100 °C and 110 °C, and the lower limit temperature is between 90 °C and 100 °C.

3. The temperature managing system of claim 2, wherein the electronic device further comprises a second key component with a second temperature, and the processor (100) adjusts the rotating speed of the fan (220) based on the first temperature of the first key component (500),
wherein, the first temperature exceeds the upper limit temperature more than the second temperature, or the first temperature is closer to the upper limit temperature than the second temperature.

4. The temperature managing system of claim 2, further comprising:
a position sensor, for sensing the disposing manner of the electronic device, and generating a position information correspondingly,
wherein, the processor (100) sets a value of the target rotating speed of the fan (220) based on the position information.

5. The temperature managing system of anyone of the claims 2 to 4, wherein the rotating speed control signal (C_S) is a pulse width modulation signal and has a duty cycle,
wherein, when the first temperature of the first key component (500) is outside the predefined temperature range, the processor (100) gradually increases or decreases the duty cycle based on a duty cycle difference, so as to gradually increase or decrease the rotating speed of the fan (220), and the duty cycle difference is a fixed amount or a non-fixed amount.

6. The temperature managing system of claim 5, wherein when the duty cycle difference is the non-fixed amount, the processor (100) sets a current value of the duty cycle based on an average value of an initial value of the duty cycle and a previous value of the duty cycle.

7. The temperature managing system of anyone of the claims 2 to 4, wherein the rotating speed control signal (C_S) is a voltage signal and corresponds to an input voltage,
wherein, when the temperature of the first key component (500) is outside the predefined temperature range, the processor (100) gradually increases or decreases the input voltage based on a voltage difference, so as to gradually increase or decrease the rotating speed of the fan (220), and the voltage difference is a fixed amount or non-fixed amount.

8. The temperature managing system of claim 7, wherein when the voltage difference is a non-fixed amount, the processor (100) sets a current value of the input voltage based on an average value of an initial value of the input voltage and a previous value of the input voltage.

9. The temperature managing system of anyone of the claims 2 to 8, wherein when the first temperature of the first key component (500) is within the predefined temperature range and is lower than a threshold temperature, the processor (100) sets the rotating speed of the fan (220) as an energy-saving rotating speed,
wherein, the threshold temperature is an average value of the upper limit temperature and the lower limit temperature, and the energy-saving rotating speed comprises 0 rpm.

10. The temperature managing system of anyone of the claims 1 to 9, wherein the first interface (110) is a general-purpose-input-and-output (GPIO) interface, and the second interface (120) is an inter-integrated-circuit (I²C) interface.

11. A temperature managing method, for managing a temperature of an electronic device, wherein the electronic device comprises a first key component (500) having a first temperature, the temperature managing method comprising:
sensing the first temperature of the first key component (500) in the electronic device by a temperature sensor, and generating a temperature information (INF_T) accordingly;
receiving the temperature information (INF_T) by a processor (100);
generating a rotating speed control signal (C_S) correspondingly based on the temperature information (INF_T) by the processor (100); and
sending the rotating speed control signal (C_S) to a rotating speed controller of a fan module (200) by the processor (100), so as to control a rotating speed of a fan of the fan module (200),
wherein, the processor (100) is coupled to the fan module (200) through a first interface (110), and coupled to the temperature sensor through a second interface (120).

12. The temperature managing method of claim 11, wherein the step of controlling the rotating speed of the fan (220) of the fan module (200) comprising:
initially setting the rotating speed of the fan (220) as a target rotating speed by the processor (100); and
adjusting the rotating speed of the fan (220) through the rotating speed control signal (C_S) by the processor (100) when the temperature information (INF_T) indicates that the first temperature of the first key component (500) is outside a predefined temperature range,
wherein, the predefined temperature range is between an upper limit temperature and a lower limit temperature,
wherein the upper limit temperature is between 100 °C and 110 °C, and the lower limit temperature is between 90 °C and 100 °C.

13. The temperature managing method of claim 12, wherein the electronic device further comprises a second key component having a second temperature, and the processor (100) adjusts the rotating speed of the fan (220) based on the first temperature of the first key component (500),
wherein, the first temperature exceeds the upper limit temperature more than the second temperature, or the first temperature is closer to the upper limit temperature than the second temperature.

14. The temperature managing method of claim 12, wherein the step of setting the target rotating speed of the fan (220) comprising:
sensing the disposing manner of the electronic device by a position sensor, and correspondingly generating a position information; and
setting a value of the target rotating speed of the fan (220) based on the position information by the processor (100).

15. The temperature managing method of anyone of the claims 12 to 14, wherein the rotating speed control signal (C_S) is a pulse width modulation signal and has a duty cycle, and the step of adjusting the rotating speed of the fan (220) comprising:
when the first temperature of the first key component (500) is outside the predefined temperature range, gradually increasing or decreasing the duty cycle based on a duty cycle difference, so as to gradually increasing or decreasing the rotating speed of the fan (220),
wherein, the duty cycle difference is a fixed amount or a non-fixed amount.
